# EUROPEAN PATENT SPECIFICATION

(11) **EP 3 239 383 B1**
(45) Date of publication and mention of the grant of the patent: **07.10.2020**
(21) Application number: 15871906.2
(22) Date of filing: 18.12.2015
(51) Int. Cl.: D06F 37/26, F16C 35/067, D06F 23/06, F16C 19/38

(54) **DRUM WASHING MACHINE**
TROMMELWASCHMASCHINE
MACHINE À LAVER À TAMBOUR

(30) Priority: 22.12.2014 JP 2014259456
(43) Date of publication of application: 01.11.2017
(73) Proprietor: Haier Asia Co., Ltd, Tokyo 100-0005 (JP); Qingdao Haier Washing Machine Co. Ltd., Qingdao, Shandong 266101 (CN)
(72) Inventor: YONEDA, Masanori, Tokyo 100-0005 (JP); TANAKA, Hiroyuki, Tokyo 100-0005 (JP)
(74) Representative: Pfenning, Meinig & Partner mbB
(86) International application number: PCT/CN2015/097811
(87) International publication number: WO 2016/101838

(56) References cited:
- CN-U- 203 862 421
- CN-U- 203 862 421
- CN-U- 203 992 125
- DE-A1-102007 013 935
- JP-A- 2001 208 102
- US-A1- 2002 153 794
- US-A1- 2007 137 260

## Description

### TECHNICAL FIELD

The present invention relates to a drum washing machine capable of increasing the washing capacity or reducing the installation space by bringing the bottom surface of the drum close to the back surface of the housing.

### BACKGROUND

In the past, a lot of proposals have been made as a drum washing machine in which a transversely configured drum whose front side is opened and the drum is rotated, thereby washing laundry contained in the drum together with water.

For example, the patent literature 1 below discloses a solution. A substantially cylindrical outer drum having an opening in a front surface and a substantially cylindrical drum configured in the outer drum and having an opening in a front surface are arranged in a housing. A bearing is directly driven by a motor while a rotating shaft installed on a back surface of the drum is rotatably supported by the bearing arranged on the back surface of the outer drum. By adopting so-called direct drive structure in which the motor is directly connected with the rotating shaft, a center of gravity position around the rotating shaft can be corrected, so that vibration is lowered; and an internal structure is simplified, thereby reducing the manufacturing cost.

In addition, in the patent literature 1, a bearing fixing member for supporting the bearing is configured through a concave part formed in the back surface of the outer drum, and the motor is installed in the concave part having the bearing fixing member, so that the direct drive structure is formed, and a backward protrusion amount, i.e., a size in a depth direction may be suppressed. Therefore, the drum capacity may also be increased without changing the size of the housing, so that the washing capacity is increased.

### Existing Technical Literature

### Patent Literature

Patent literature 1: Japanese Unexamined Patent Application Publication No. 2002-336596

### Technical problems to be solved by the invention

However, in the above structure, since a gap between the back surface of the drum and the housing is still large and a large useless space exists, a room for further improvement is reserved.

The reason for needing such a large gap is that a supporting length to support the rotating shaft needs to be guaranteed to be larger than a certain length.

Specifically, since the drum washing machine supports a structure of the drum through the rotating shaft in a cantilever shape and then washings and water housed in the drum moves through rotation of the drum, loads in a radial direction and a thrust direction and a moment load of surface waggling along with the drum may be applied to the bearing for supporting the rotating shaft.

As such bearing, deep groove ball bearings easy to operate and assemble are generally used, but since the deep groove ball bearings have a structure that balls in the deep groove ball bearings are in point contact with an outer ring and an inner ring, a load resistant capability in the radial direction and the axial direction is smaller. Therefore, for supporting the loads in the radial direction and the thrust direction and the moment load and reducing the surface waggling amplitude, the deep groove ball bearings are used in groups and are separately configured at intervals in the axial direction. Moreover, since the rotating shaft is supported by the bearing at multiple positions along the axial direction, the supporting length of the rotating shaft needs to be guaranteed to be larger than a certain length.

Therefore, the rotating shaft on the back surface side of the drum needs to have a length larger than the certain length, and correspondingly, the gap between the drum and the housing may also be increased, and thus a useless space which cannot be used for washing may be increased. An example of a tilted drum-type washing machine of a new structure, in which a structure of the drum type washing machine is improved, to make introduction and take out of laundry easy, and to enhance a washing performance is disclosed in the application US2007/0137260A1, and an example of a group-motorized pumps for wells, driving holes, etc. becoming possible to shorten an axial dimension of the motor for making the apparatus compact is disclosed in the application US2002/0153794A1.

### SUMMARY

The purpose of the present invention is to effectively solve such problems, and specifically, is to provide a drum washing machine which can reduce an internal useless space and realize an increase in washing capacity or a decrease in an arrangement space by shortening a rotating shaft installed on a back surface of the drum.

### Technical solution for solving problems

In order to achieve related purposes, the present invention adopts the following solution.

Namely, the drum washing machine of the present invention includes: a drum, wherein the drum is a cylindrical shaped drum having an opening on a front surface; a rotating shaft attached to a back surface of the drum; a bearing rotatably supporting the rotating shaft, wherein the bearing is a multiple-row tapered roller bearing; the rotating shaft is inserted into an inner side of an inner ring of the multiple-row tapered roller bearing; wherein the rotating shaft is provided with a first circumferential surface behind a flange part of the rotating shaft, a sealing part for sealing an elastic sheet of a sealing member, and a bearing fitting part which has a second circumferential surface with a smaller diameter compared to the diameter of the first circumferential surface and is fitted to the inner ring of the multiple-row tapered roller bearing behind the flange part; and when the bearing fitting part of the rotating shaft is fitted to the inner ring, a back side end surface of the sealing part is butted to an end surface of one side of the inner ring, and the rotating shaft is positioned relative to the multiple-row tapered roller bearing.

In addition, preferably, in the present invention, the multiple-row tapered roller bearing includes two rows of tapered rollers which are spaced apart in an axial direction and tapered rollers in each row are arranged such that their small diameter sides opposed to each other.

Moreover, preferably, in the present invention, an outer ring of the multiple-row tapered roller bearing is axially fixed to a bearing fixing member.

Moreover, preferably, in the present invention, the outer ring of the multiple-row tapered roller bearing is composed of one member, and the inner ring is composed of two inner ring elements axially separated from each other.

Moreover, preferably, in the present invention, the rotating shaft is inclined with respect to a horizontal plane such that the front surface of the drum is in a position higher than the back surface of the drum.

### Effect of the invention

According to the present invention described above, since rigidity is improved by using the tapered roller bearing with strong load bearing capacity, the rotating shaft may be shortened and the internal useless space may be reduced, thereby increasing the washing capacity or decreasing in the installation space.

Particularly, according to the present invention, the multiple-row tapered roller bearing includes two rows of tapered rollers which are spaced apart in the axial direction and tapered rollers in each row are arranged such that their small diameter sides opposed to each other, so that an action point is expanded to enable the multiple-row tapered roller bearing to properly bear the moment load, thereby further reducing vibration of the drum.

In addition, according to the present invention, the outer ring and the inner ring forming the multiple-row tapered roller bearing are axially fixed, a hidden danger that various members deviate in positions relative to one another due to external force and vibration may be reduced, and the present invention may be stably used for a long time.

Moreover, according to the present invention, the outer ring is composed of one member, and the inner ring is composed of two inner ring elements, an internal gap of the multiple-row tapered roller bearing is properly guaranteed and the bearing is easily assembled, and the drum washing machine may be conveniently assembled integrally.

In addition, according to the present invention in which the drum is inclined in such a manner that the front surface of the drum is in a position higher than the back surface of the drum, effects generated by the above structure can be obtained more apparently.

### BRIEF DESCRIPTION OF DRAWINGS

Fig. 1 is a longitudinal section view illustrating a substantial structure of a drum washing machine according to an embodiment of the prevent invention.
Fig. 2 is a longitudinal section view illustrating an enlarged main portion of the drum washing machine.
Fig. 3 is an explanatory diagram illustrating a flow when a rotating shaft and a bearing of the drum washing machine are assembled.
Fig. 4 is an explanatory diagram illustrating a flow when the rotating shaft and the bearing of the drum washing machine are assembled, following Fig. 3.
Fig. 5 is a longitudinal section view illustrating a variation example of the drum washing machine.
Fig. 6 is a longitudinal section view illustrating a whole structure of a drum washing machine as a comparative example of the present invention.
Fig. 7 is a longitudinal section view illustrating an enlarged main portion of a drum washing machine as a comparative example of the present invention.

### Reference numerals:

1: housing; 2: outer drum; 3: drum; 4: door; 5: rotating shaft; 6: bearing fixing member; 7: bearing (multiple-row tapered roller bearing); 8: motor; 71: inner ring; 71a: inner ring element; 72: outer ring; 73: tapered roller; and W0-W2: drum washing machine (washing machine).

### DETAILED DESCRIPTION

Hereinafter, embodiments of the present invention are described with reference to drawings.

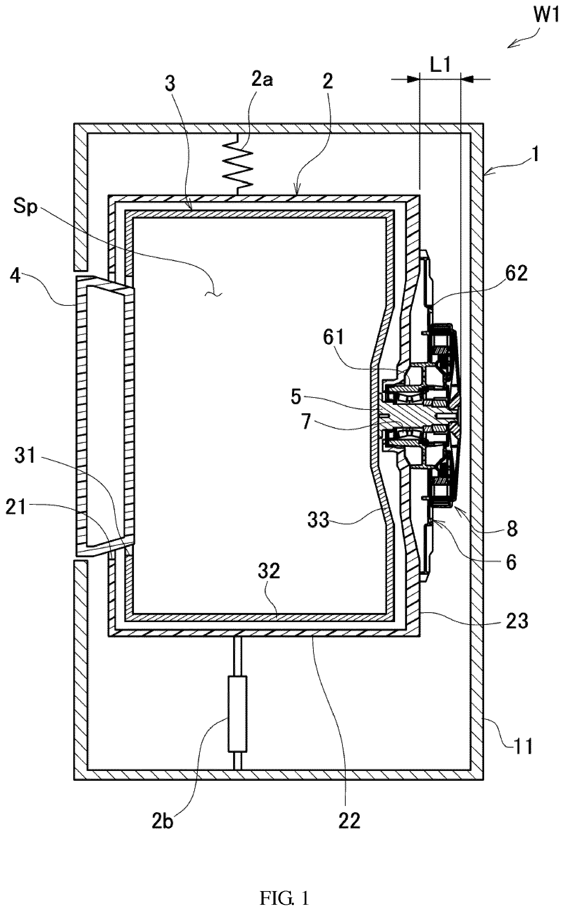

Fig. 1 is a longitudinal section view schematically illustrating a drum washing machine (hereinafter referred to as "the washing machine") W1 of an embodiment of the present invention. As shown in Fig. 1, the washing machine W1 includes an outer drum 2, supported in a box-shaped housing 1; a drum 3, configured in the outer drum; a motor 8, rotationally driving the drum 3; and a door 4, capable of opening the interior of the drum 3.

The outer drum 2 has a substantially bottomed cylindrical shape and has a substantially circular back surface 23 and a circumferential surface 22 extending to the back surface 23, and an opening 21 is formed in a front surface, i.e. the front surface is opened. The outer drum 2 is supported from a lower side through a shock absorber 2b while being suspended in the housing 1 by a spring 2a. Therefore, the outer drum 2 may be elastically supported in a swinging manner, thereby effectively inhibiting vibration generated by rotation of the drum 3.

The door 4 is a transversely-opening door arranged on the housing 1 and may seal an internal space Sp of the outer drum 2 in cooperation with a sealing member (not shown) provided in the opening 21 of the outer drum 2, and the internal space Sp is opened by opening the door, so as to take in/ out washings.

Like the outer drum 2, the drum 3 also has a substantially bottomed cylindrical shape, and has a substantially circular back surface 33 and a circumferential surface 32 extending to the back surface 33; and an opening 31 is formed in a front surface, i.e. the front surface is opened. A plurality of water through holes (not shown) are provided on the circumferential surface 32. Water flows may be generated through the water through holes during washing, and water may flow out of a drainage hole (not shown) formed in the outer drum 2 through the water through holes during drainage.

In addition, a rotation shaft 5, which is a shaft body extending rearward, is fixed to a center of the back surface 33 of the drum 3. The rotating shaft 5 is supported via the bearing 7 by a bearing fixing member 6 arranged on the back surface 23 of the outer drum 2. Therefore, the drum 3 is supported in a cantilever manner while freely rotating substantially around the same axis as the outer drum 2. Also, the motor 8 is installed on the back surface of the rotating shaft 5 and the rotating shaft 5 and the drum 3 can be integrally rotated by the motor 8.

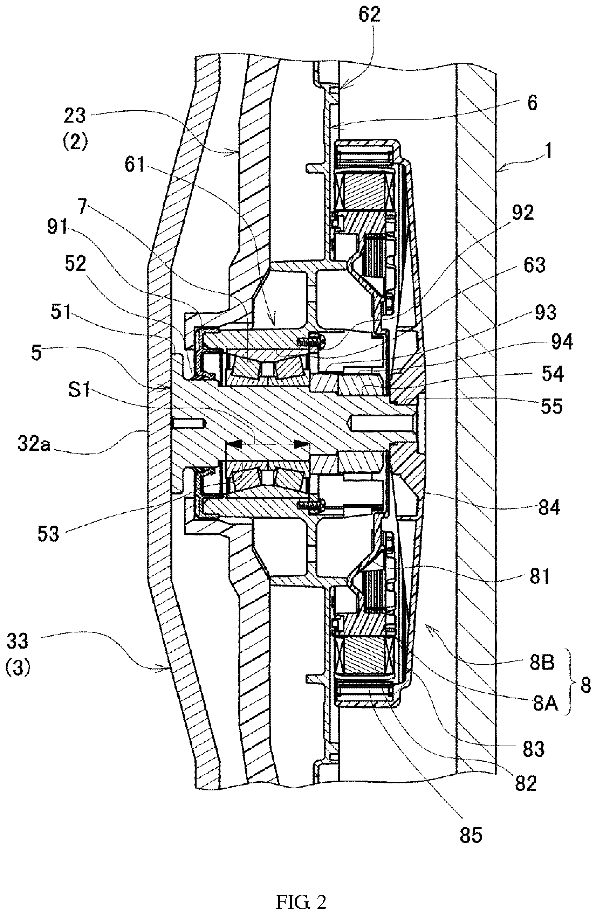

Fig. 2 is an enlarged longitudinal section view illustrating the periphery of the rotating shaft 5. Hereinafter, a supporting structure for supporting the rotating shaft 5 and a structure of the motor 8 are described in detail with reference to Fig. 2.

The above bearing fixing member 6 is composed of a lug boss part 61 which is arranged in the center and extends forwards and backwards, and a disc part 62 which is in a substantial disc shape with the lug boss part 61 as the center. Herein, the substantial disc shape is not necessarily made into an intact circular shape when looking down, and may also be made into a shape allowing a portion to be cut or to protrude.

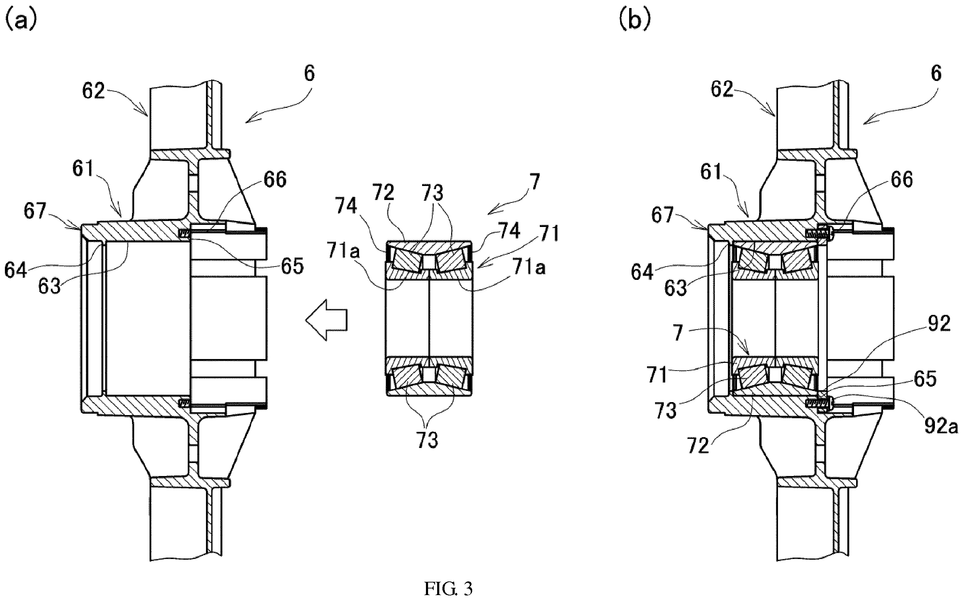

A rib for reinforcement is appropriately formed on the disc part 62, and the bearing fixing member 6 is attached to the outer drum 2 by fixing the disc part 62 to the back surface 23 of the outer drum 2. A hole-shaped bearing insertion part 63 is formed in the center of the lug boss part 61, and a bearing 7 can be inserted into the bearing insertion part 63 to perform supporting. In addition, a sealing member 91 is provided at a front end 67 (referring to Fig. 3) of the lug boss part 61. The sealing member 91 seals between the outer drum 2 and the outer peripheral side and also seals with the rotation shaft 5 on the inner peripheral side.

As the bearing 7, a so-called multiple-row tapered roller bearing having a plurality of tapered rollers 73 arranged in two rows in the axial direction is used, and the rotation shaft 5 is rotatably supported by the bearing 7.

A disc-shaped flange part 51 is formed at the front end of the rotating shaft 5, and a plane part 32a formed in the center of the back surface 31 of the drum 3 is installed at the flange part 51 by using a plurality of screws (not shown). Therefore, the drum 3 can be integrally rotated with the rotating shaft 5 together and is supported in a cantilever manner by the bearing fixing member 6 through the bearing 7.

Moreover, in order to drive the rotating shaft 5, the motor 8 is arranged on the back side of the bearing fixing member 6. The motor 8 is a direct-current brushless motor having an outer rotor type flat structure composed of a stator 8A and a rotor 8B, and has a direct drive structure for directly driving the rotating shaft 5. By adopting such direct drive structure, the number of parts can be reduced to simplify the structure, and the center of gravity position around the rotating shaft 5 may be corrected to reduce vibration.

The stator 8A includes: a stator housing 81 made of resin and having a hollow coil supporting part which radially protrudes on the outer peripheral side; an iron core 82, fitted in the coil supporting part of the stator housing 81; and a coil 83, that winds around the iron core 82.

The rotor 8B is composed of a rotor housing 84 having a substantially circular plate shape and made of resin and a permanent magnet 85 installed on an inner circumferential surface of a bending part of the rotor housing 84. The rotor housing 84 is fitted to an installing part 55 at the back end of the rotating shaft 5 and is fixed by screws (not shown). Therefore, the rotor 8B and the rotating shaft 5 integrally rotate.

Through the above configuration, the rotor 8B covers the outer side of the stator 8A, and configuration is arranged by forming a certain gap between the periphery of the iron core 82 of the stator 8A and the permanent magnet 85.

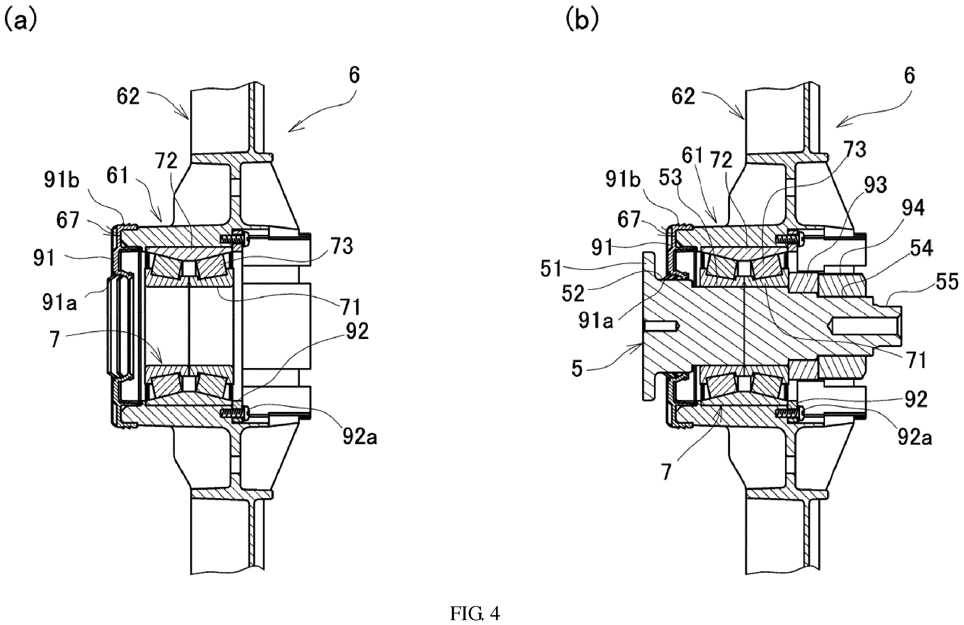

Fig. 3 and Fig. 4 are explanatory diagrams illustrating a flow of a condition that the bearing 7 and the rotating shaft 5 are installed at the bearing fixing member 6. Hereinafter, the structure around the bearing 7 and the rotating shaft 5 is further described in detail with reference to the drawings.

Fig. 3(a) is a diagram illustrating a state before the bearing 7 is installed at the bearing fixing member 6. As shown in Fig. 3(a), the bearing 7 has a structure in which a plurality of tapered rollers 73 are arranged between an inner ring 71 and an outer ring 72. The tapered rollers 73 form two rows spaced apart in the axial direction, and the tapered rollers 73 of each row are arranged in such a manner that the small diameter sides are opposed to each other, that is, so-called back-aligned configuration. It should be noted that "opposed" as used herein means to make the small diameter sides close to each other, and does not mean that the opposing surfaces are parallel to each other. The outer ring 72 is provided with two rows of rolling surfaces in which the tapered rollers 73 are in contact with the inner peripheral surface side in the circumferential direction. Moreover, the inner ring 71 is composed of two inner ring elements 71a, 71b which are axially separated from each other. By properly changing the axial length of each of the inner ring elements 71a, 71b, gaps between the tapered rollers 73 and the inner ring 71 as well as between the tapered rollers 73 and the outer ring 72 may be regulated. By using the outer ring 72 and the inner ring elements 71a, 71b as a set, the bearing 7 can be handled as one assembly part. It should be noted that, also preferably, a ring-shaped metal plate, referred as a spacer, is inserted between the inner ring elements 71a, 71b for adjusting the gaps.

By adopting such structure, the bearing 7 can be easily assembled, and even if when axial loads are applied to the inner ring 71 and the outer ring 72 respectively during assembling, an excessive increase in rotating resistance can be suppressed almost without changing internal gaps to realize stable use.

Such tapered rollers are characterized in that since the inner ring 71 and the outer ring 72 are in line contact with the tapered rollers 73, compared with deep groove ball bearings in point contact, loading capability and rigidity are larger.

The bearing 7 is pressed into the bearing insertion part 63 formed on the inner side of the lug boss part 61 of the bearing fixing member 6 from the back. An annular convex part 64 which protrudes inwards is formed at the front part of the bearing insertion part 63, and the outer ring 72 of the bearing 7 may be axially positioned through the convex part 64. A step surface 65 is formed at the back part of the bearing insertion part 63, and threaded holes 66 are formed in multiple positions of the step surface 65 in the circumferential direction.

Moreover, as shown in Fig. 3(b), after the bearing 7 is inserted into the bearing insertion part 63 formed at the lug boss part 61, a plate member, i.e., a stop plate 92, formed in an annular shape is butted to the step surface 65 and is fixed by screwing the screws 92a into the threaded holes 66. In this way, the outer ring 72 is clamped by the convex part 64 and the stop plate 92 and is axially fixed relative to the bearing fixing piece 6.

Further, as shown in Fig. 4(a), a sealing member 91 is installed at the front end part 67 of the lug boss part 61. The sealing member 91 is provided with an elastic sheet 91a which extends toward the inner peripheral side and an elastic sheet 91b which extends toward the outer peripheral side.

Moreover, as shown in Fig. 4(b), the rotating shaft 5 is inserted into the inner side of the inner ring 71 of the bearing 7. The rotating shaft 5 is provided with a circumferential surface with a slightly small diameter behind the flange part 51, a sealing part 52 for sealing the elastic sheet 91a of the sealing member 91, and a bearing fitting part 53 which has a circumferential surface with a smaller diameter and is fitted to the inner ring 71 of the bearing 7 behind the flange part 51. When the bearing fitting part 53 of the rotating shaft 5 is fitted to the inner ring 71, the back side end surface of the sealing part 52 is butted to the end surface of one side of the inner ring 71, and thus the rotating shaft 5 is positioned relative to the bearing 7.

In such state, by fitting a shaft sleeve 93 from the rear side of the rotating shaft 5, and screwing a nut 94 in a threaded part 54 formed in the periphery of the rotating shaft 5, the inner ring 71 is clamped by the back side end surface of the sealing part 52 and the shaft sleeve 93 and is axially fixed relative to the rotating shaft 5. It should be noted that, by screwing the nut 94, axial compressive force is applied to the inner ring 71, but since the inner ring elements 71a, 71b are butted to each other through the end surfaces and there is almost no change in the relative positions, the internal gap at the periphery of the tapered roller 73 are properly kept without excessively increasing the rotating resistance.

In addition, since the inner ring 71 and the outer ring 72 are axially fixed respectively, a hidden danger of misalignment of members due to external force and vibration is reduced to realize long-term stable use.

A rotor installing part 55 is arranged at the portion, more protruding backward than the nut 94, of the rotating shaft 5, and the rotor 8B can be installed on the portion, as mentioned above (referring to Fig. 2).

Through the above structure, by applying a current to a coil 83 of the stator 8A as shown in Fig. 2, a magnetic attractive force or a magnetic repulsive force is generated between the iron core 82 and the permanent magnet 84 so that the rotary shaft 5 and the drum 3 can be rotated along with the rotor 8B. Moreover, by putting washings and water into the drum 3 as shown in Fig. 1 and rotating the drum 3, a washing action can be executed, and a dewatering action is executed by rotating the drum 3 at high speed along with drainage.

The drum 3 is supported in the cantilever manner by the rotating shaft 5, and a larger load is applied to the bearing 7 for supporting the rotating shaft 5. Moreover, due to vibration during rotation of the drum 3 and movement of the washings and the water housed in the drum 3, the load is further increased, and loads in a radial direction and a thrust direction and moment loads are applied.

However, since the washing machine W1 uses a multiple-row tapered roller bearing as the bearing 7 for supporting the rotating shaft 5, compared with the commonly used deep groove ball bearings, the loading capability is high, the rigidity is very high with only one assembly part, and the overall strength of the supporting structure for supporting the rotating shaft 5 can be improved.

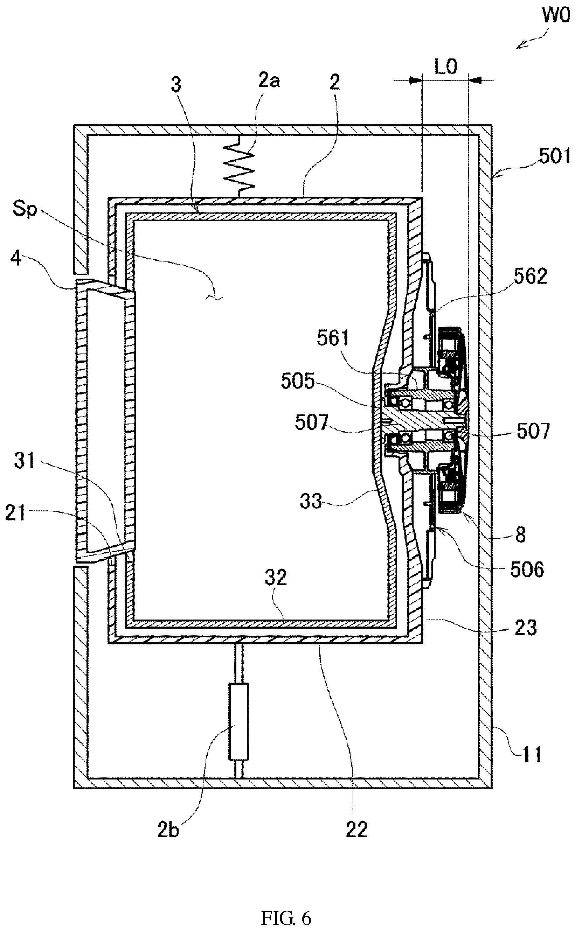

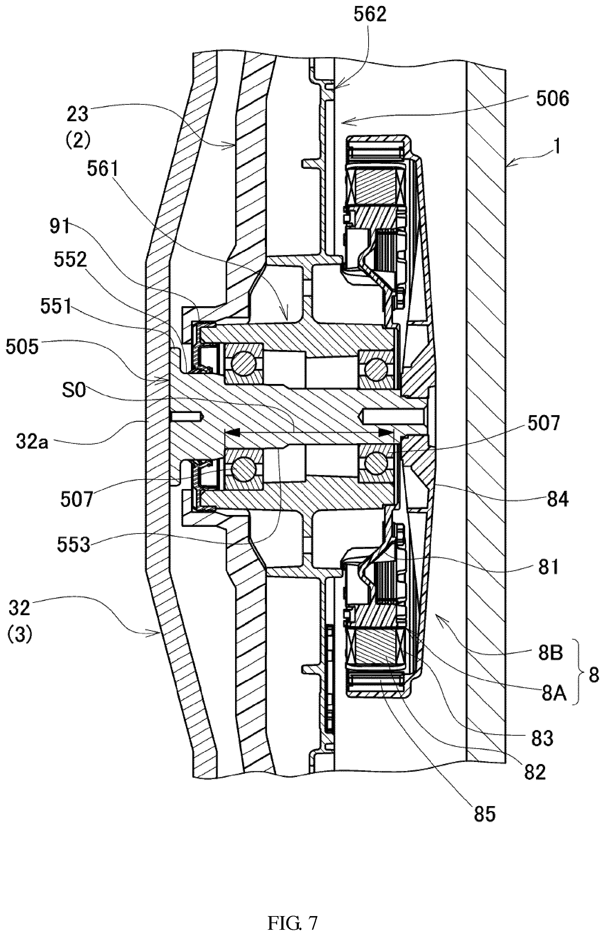

Herein, for comparison with the present invention, a comparative example based on the same configuration as in Figs. 1 and 2, in which the bearing 7 is replaced with the existing deep groove ball bearing, is shown. Fig. 6 is a longitudinal sectional view showing the entire configuration of a washing machine W0 which is a comparative example with the present invention, and Fig. 7 is a longitudinal sectional view enlarging the periphery of the rotating shaft 505. Figs. 6 and 7 correspond to Fig. 1 and Fig. 2, respectively, and the same reference numerals are given to the same members as those described in Fig. 1 and Fig. 2, and description thereof will be omitted.

As shown in Fig. 6 and Fig. 7, the back surface 33 of the drum 3 is installed at the flange part 551 of a rotating shaft 505, and the rotating shaft 505 is rotatably supported by a bearing fixing member 506 through a pair of bearings 507, 507. The bearing fixing member 506, like the bearing fixing member 6 (referring to Fig. 1), is also composed of a lug boss part 561 arranged in the center and a substantially disc-shaped disc part 562 with the lug boss part 561 as the center, and the disc part 562 is fixed on the back surface 23 of the outer drum 2.

The deep groove ball bearings are used as the bearings 507, 507, so that a bearing fitting part 553 forming the outer circumferential surface of the rotating shaft 505 is fitted to the inner ring. At this time, the bearings 507, 507 are separately configured at a gap in the axial direction. In addition, a fastening force is applied in a direction to bring the inner rings close to each other, and a pressure is increased among outer rings. Therefore, it is considered that since overlarge pressure is applied to each bearing 507 due to dimensional accuracy, the rotating resistance of each bearing 507 is increased.

In addition, by using an ordinary deep groove ball bearing as the bearing 507, although operation becomes easy, the loading capability of each bearing 507 becomes small due to the structure that balls are in point contact with the inner rings and the outer rings. Therefore, the bearings 507 need to be used with two in one set, and the drum 3 and the rotating shaft 505 are kept in the cantilever manner together regardless of vibration during rotation, so that bearings 507 need to be configured with a certain distance from each other. Therefore, a supporting length S0, which is an axial length of the supporting portion of the rotating shaft 505 supported by the bearings 507, 507needs to be set to be longer, as shown in drawings. Therefore, the overall length of the rotating shaft 505 also becomes longer, and the length L0 from the back end of the outer drum 2 to the back end of the motor 8 also becomes longer.

Relative to this, in the washing machine W1 of the present embodiment, as shown in Fig. 1 and Fig. 2, since the multiple-row tapered roller bearing is used as the bearing 7, the supporting rigidity of the rotating shaft 5 can be improved by using only one bearing 7; the loads in the radial direction and the thrust direction and the moment load acting on the rotating shaft 5 can be properly supported; and the drum 3 may stably rotate. In addition, the axial length, i.e., the supporting length S1, of the supporting portion of the rotating shaft 5 becomes shorter, as shown in drawings. Therefore, the overall length of the rotating shaft 5 can be shortened, and thus the length L1 from the back end of the outer drum 2 to the back end of the motor 8 can be shortened.

Therefore, when maintaining the sizes of the housing 1 as in the conventional case, by increasing the axial length of the drum 3 as much as the length L1 is shortened, the volume of the drum 3 is increased and the washing capacity is increased .

In addition, when maintaining the sizes of the drum 3 and the outer drum 2 as in the conventional case, the back wall 11 forming the back surface of the housing 1 is moved forward to reduce the depth dimension by the length L1 being shortened, it is also possible to reduce installation space by reducing the size of the housing 1.

Furthermore, by using a multiple-row tapered roller bearing as the bearing 7, the overall strength of the supporting structure supporting the rotating shaft 5 can also be increased, so that not only the surface waggling amplitude may be inhibited to reduce vibration and noise, but also load resistant performance may be improved, thereby increasing the washing capacity.

In addition to this, since the amount of the bearing 7 is one, the amount of the parts is small, and assembling can be performed simply by merely fixing the inner ring 71 and the outer ring 72 in the axial direction, respectively, so that the manufacturing cost can be reduced.

It should be noted that specific structures of various parts are not limited to the aforementioned embodiments.

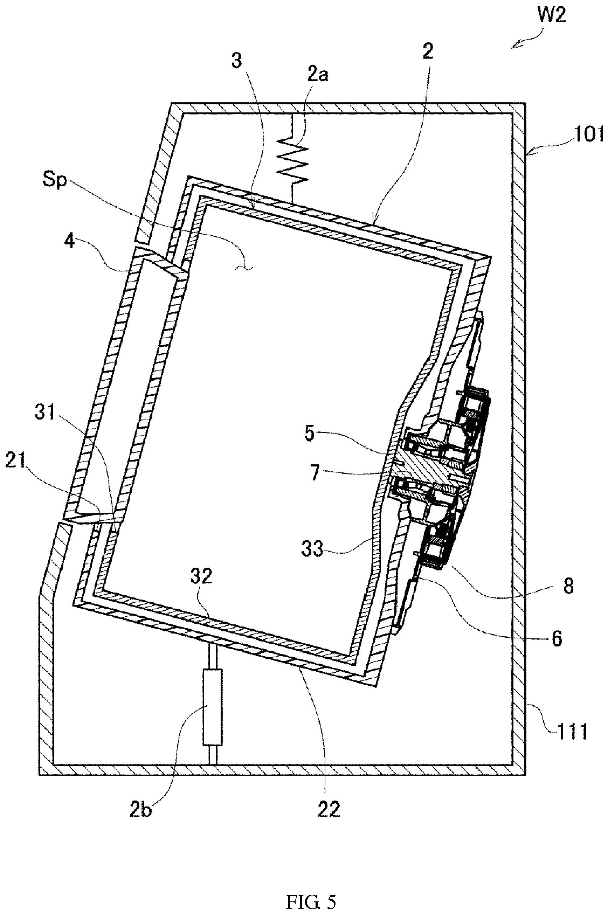

For example, Fig. 5 is a longitudinal section view illustrating a variation example of the embodiment, i.e., a substantial structure of the washing machine. In the washing machine W2 as shown in Fig. 5, the rotating shaft 5 is inclined relative to a horizontal plane such that the front surface of the drum 3 is in a position higher than the back surface. In this case, by matching with the inclination of the drum 3 and the rotating shaft 5, the outer drum 2, the bearing fixing member 6 and the motor are also inclined. It should be noted that a housing 101 is made into a shape different from the above housing 1.

Under such condition that the drum 3 is configured to be inclined, except that the washings are easy to be observed from the front, the present invention also has the advantage of easiness in taking in/ out the washings.

In such a structure, since a larger load in the thrust direction is applied to the bearing 7, the load applied to the bearing 7 may be increased. In addition, since the washings and the water housed in the housing greatly move forwards and backwards, the load combining forces in various directions and the moment load may be applied to the drum 3. Therefore, compared with the above embodiment, more loads are applied to the bearing 7, but since the multiple-row tapered roller bearing with high loading capacity is used as the bearing 7, stable rotation can be realized. Namely, the above effect generated by using the multiple-row tapered roller bearing can be obtained more apparently.

## Claims

1. A drum washing machine comprising:
a drum (3), wherein the drum (3) is a cylindrical shaped drum having an opening (31) on a front surface;
a rotating shaft (5) attached to a back surface (33) of the drum; and
a bearing (7) rotatably supporting the rotating shaft (5),
**characterized in that** the bearing (7) is a multiple-row tapered roller bearing; wherein
the rotating shaft (5) is inserted into an inner side of an inner ring (71) of the multiple-row tapered roller bearing;
wherein
the rotating shaft (5) is provided with a first circumferential surface behind a flange part (51) of the rotating shaft (5), a sealing part (52) for sealing an elastic sheet (91a) of a sealing member (91), and a bearing fitting part (53) which has a second circumferential surface with a smaller diameter compared to the diameter of the first circumferential surface and is fitted to the inner ring (71) of the multiple-row tapered roller bearing behind the flange part (51); and
when the bearing fitting part (53) of the rotating shaft (5) is fitted to the inner ring (71), a back side end surface of the sealing part (52) is butted to an end surface of one side of the inner ring (71), and the rotating shaft (5) is positioned relative to the multiple-row tapered roller bearing.

2. The drum washing machine according to claim 1, wherein
the multiple-row tapered roller bearing includes two rows of tapered rollers (73) which are spaced apart in an axial direction, and small diameter sides of the two rows of tapered rollers are opposed to each other.

3. The drum washing machine according to claim 2, wherein
an outer ring (72) of the multiple-row tapered roller bearing is axially fixed to a bearing fixing member (6).

4. The drum washing machine according to claim 3, wherein
the outer ring (72) of the multiple-row tapered roller bearing is composed of one member, and the inner ring (71) is composed of two inner ring elements (71a) axially separated from each other.

5. The drum washing machine according to any one of claims 1-4, wherein
the rotating shaft (5) is inclined with respect to a horizontal plane such that the front surface of the drum is in a position higher than the back surface (33) of the drum.

## Patentansprüche

1. Trommelwaschmaschine, umfassend:
eine Trommel (3), wobei die Trommel (3) eine zylindrisch geformte Trommel ist, die eine Öffnung (31) an einer vorderen Oberfläche aufweist;
eine Drehwelle (5), die an einer hinteren Oberfläche (33) der Trommel befestigt ist; und
ein Lager (7), das die Drehwelle (5) drehbar abstützt,
**dadurch gekennzeichnet, dass** das Lager (7) ein mehrreihiges Kegelrollenlager ist; wobei
die Drehwelle (5) in eine Innenseite eines Innenrings (71) des mehrreihigen Kegelrollenlagers eingesetzt ist;
wobei
die Drehwelle (5) mit einer ersten Umfangsoberfläche hinter einem Flanschteil (51) der Drehwelle (5), einem Dichtungsteil (52) zum Abdichten einer elastischen Lage (91a) eines Dichtungselements (91) und einem Lageranbringungsteil (53) versehen ist, das eine zweite Umfangsoberfläche mit einem kleineren Durchmesser im Vergleich zu dem Durchmesser der ersten Umfangsoberfläche aufweist und an dem Innenring (71) des mehrreihigen Kegelrollenlagers hinter dem Flanschteil (51) angebracht ist; und
wenn der Lageranbringungsteil (53) der Drehwelle (5) an dem Innenring (71) angebracht ist, eine rückseitige Endoberfläche des Dichtungsteils (52) an eine Endoberfläche einer Seite des Innenrings (71) anstößt und die Drehwelle (5) relativ zu dem mehrreihigen Kegelrollenlager positioniert ist.

2. Trommelwaschmaschine nach Anspruch 1, wobei das mehrreihige Kegelrollenlager zwei Reihen von Kegelrollen (73) umfasst, die in axialer Richtung voneinander beabstandet sind, und die Seiten mit kleinem Durchmesser der zwei Reihen von Kegelrollen einander gegenüberliegen.

3. Trommelwaschmaschine nach Anspruch 2, wobei
ein Außenring des mehrreihigen Kegelrollenlagers axial an einem Lagerbefestigungselement (6) befestigt ist.

4. Trommelwaschmaschine nach Anspruch 3, wobei
der Außenring (72) des mehrreihigen Kegelrollenlagers aus einem Element besteht und der Innenring (71) aus zwei axial voneinander getrennten Innenringelementen (71a) gebildet ist.

5. Trommelwaschmaschine nach einem der Ansprüche 1 bis 4, wobei
die Drehwelle (5) in Bezug auf eine horizontale Ebene so geneigt ist, dass die vordere Oberfläche der Trommel in einer höheren Position ist als die hintere Oberfläche (33) der Trommel.

## Revendications

1. Machine à laver à tambour comprenant :
un tambour (3), dans laquelle le tambour (3) est un tambour de forme cylindrique ayant une ouverture (31) sur une surface avant ;
un arbre rotatif (5) fixé sur une surface arrière (33) du tambour ; et
un palier (7) supportant, en rotation, l'arbre rotatif (5),
**caractérisée en ce que** le palier (7) est un palier à rouleaux progressivement rétrécis à plusieurs rangées ; dans laquelle :
l'arbre rotatif (5) est inséré dans un côté interne d'une bague interne (71) du palier à rouleaux progressivement rétrécis à plusieurs rangées ;
dans laquelle :
l'arbre rotatif (5) est prévu dans une première surface circonférentielle derrière une partie de bride (51) de l'arbre rotatif (5), une partie d'étanchéité (52) pour sceller une feuille élastique (91a) d'un élément d'étanchéité (91), et une partie d'ajustement de palier (53) qui a une seconde surface circonférentielle avec un diamètre plus petit par rapport au diamètre de la première surface circonférentielle et est montée sur la bague interne (71) du palier à rouleaux progressivement rétrécis à plusieurs rangées derrière la partie de bride (51) ; et
lorsque la partie d'ajustement de palier (53) de l'arbre rotatif (5) est montée sur la bague interne (71), une surface d'extrémité du côté arrière de la partie d'étanchéité (52) vient en butée contre une surface d'extrémité d'un côté de la bague interne (71), et l'arbre rotatif (5) est positionné par rapport au palier à rouleaux progressivement rétrécis à plusieurs rangées.

2. Machine à laver à tambour selon la revendication 1, dans laquelle :
le palier à rouleaux progressivement rétrécis à plusieurs rangées comprend deux rangées de rouleaux progressivement rétrécis (73) qui sont espacés dans une direction axiale, et les côtés de petit diamètre des deux rangées de rouleaux progressivement rétrécis sont opposés entre eux.

3. Machine à laver à tambour selon la revendication 2, dans laquelle :
une bague externe (72) du palier à rouleaux progressivement rétrécis à plusieurs rangées est axialement fixée sur un élément de fixation de palier (6).

4. Machine à laver à tambour selon la revendication 3, dans laquelle :
la bague externe (72) du palier à rouleaux progressivement rétrécis à plusieurs rangées est composée d'un élément, et la bague interne (71) est composée de deux éléments annulaires (71a) axialement séparés l'un de l'autre.

5. Machine à laver à tambour selon l'une quelconque des revendications 1 à 4, dans laquelle :
l'arbre rotatif (5) est incliné par rapport à un plan horizontal de sorte que la surface avant du tambour est dans une position plus haute que la surface arrière (33) du tambour.
